# EUROPÄISCHE PATENTSCHRIFT

(11) **EP 1 522 492 B1**
(45) Veröffentlichungstag und Bekanntmachung des Hinweises auf die Patenterteilung: **04.04.2007**
(21) Anmeldenummer: 03025295.1
(22) Anmeldetag: 06.11.2003
(51) Int. Cl.: B64C 9/00, B64C 3/26

(54) **Tragwerk-Profilstruktur eines Flugzeuges**
Wing unit airfoil structure
Structure d'un profil d'aile pour avion

(30) Priorität: 09.10.2003 DE 10346982
(43) Veröffentlichungstag der Anmeldung: 13.04.2005
(73) Patentinhaber: Airbus Deutschland GmbH, 21129 Hamburg (DE)
(72) Erfinder: Burchard, Alexander, Dipl.-Ing., 28816 Stuhr (DE)
(74) Vertreter: Hansmann, Dierk

(56) Entgegenhaltungen:
- US-A- 4 830 315

## Beschreibung

Die Erfindung bezieht sich auf eine Tragwerk-Profilstruktur eines Flugzeuges gemäß dem Oberbegriff des Anspruchs 1. Ihre Anwendung bezieht sich auf aerodynamische Verbesserungen am Tragwerk des Flugzeuges, mit denen im Hinterkantenbereich einer Tragfläche oder einer Auftriebshilfe (Landeklappe und / oder Querruder) die Entstehung von Zwangskräften in der Tragwerk-Profilstruktur durch Flügelbiegung und / oder durch Biegung der angesteuerten Auftriebeshilfe weitestgehend vermieden wird. Das Verformungsverhalten des Tragflügels oder der Auftriebshilfe soll über deren Flügelhinterkantenbereich ohne zusätzliche strukturmechanische Maßnahmen stabilisiert werden.

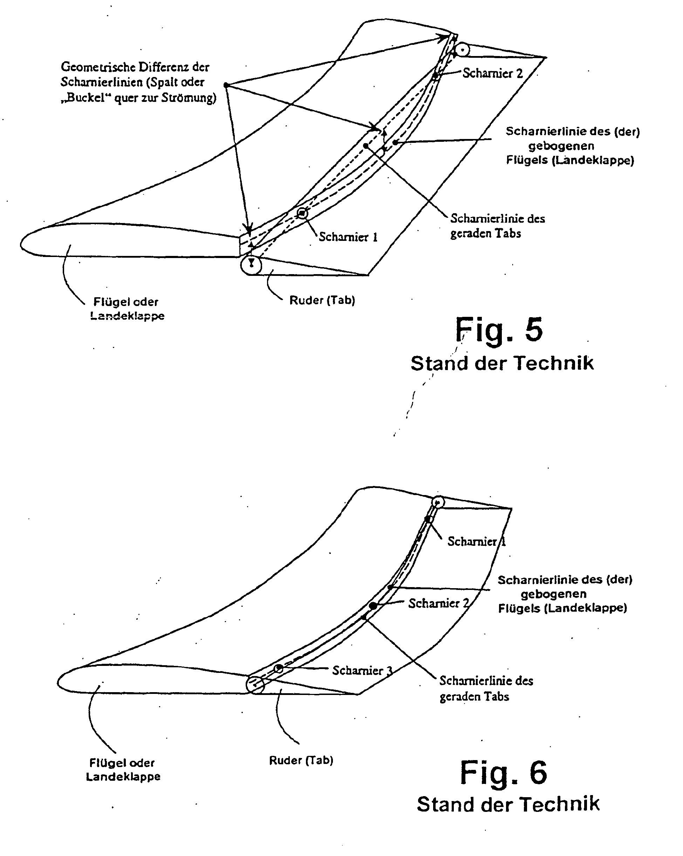

Zur Steuerung eines fliegenden Flugzeuges werden aerodynamische wirksame Stellflächen (Steuerflächen, Ruder) eingesetzt, welche bekanntermaßen (häufig) in den Bereich der Flügelhinterkante der beiden Tragflügel integriert sind. Für die Rollsteuerung wird ein Querruder vorgesehen, das gewöhnlich über zwei Scharniergelenke an den betreffenden Tragflügel angebunden ist und an der Flügelhinterkante (je nach beabsichtigter Beeinflussung der Flugsituation) nach oben oder nach unten aktuiert wird. Gemeinsam ist allen Steuerflächen, daß sie im Verhältnis zur Flügelspannweite eine geringe Länge und im Vergleich zur Flügeltiefe eine große Tiefe aufweisen. Diese Steuerflächen lassen sich (nach dem Vorbild der beigegebenen Fig. 5) normalerweise mit zwei Scharniergelenken an den Tragflügel anbinden und sind somit statisch bestimmt gelagert. Aufgrund der relativ geringen Länge des Ruders bleibt der Verformungsunterschied zur Biegelinie des Tragflügels ebenfalls gering. Bei einer derartigen Lagerung wird dem Ruder keine Flügelbiegung (keine Verformung in Flügel-z-Richtung) aufgezwungen, weshalb somit in der Ruderstruktur keine Zwangskräfte entstehen, die beispielsweise bei einer Lagerung des Ruders an der Landeklappe mit drei Scharnieren auftreten werden. Diesen Nachteil wird man berücksichtigen müssen, sofern (nach dem Vorbild der beigegeben Fig. 6) der Einsatz von schlanken Steuerflächen mit kontinuierlicher Scharnierverbindung (über eine Scharnieranbindung mit drei oder mehr Scharnieren) erforderlich wird. Dabei wird eine Steuerfläche betrachtet, welche eine Länge von etwa vier Meter (ca. 4 m) und eine Tiefe von etwa vierzig Zentimeter (ca. 0,4 m) aufweisen wird. Diese Steuerfläche des (auch in Fachkreisen auch als "Tab" bezeichneten) Ruders muß zur Gewährleistung einer aerodynamisch einwandfreien Anbindung an den Flügel oder die Landeklappe über mehrere (über mehr als zwei) Scharniere angebunden sein, wobei eine Gleichheit der beiden Biegelinien und der (in Fachkreisen auch als "Hingeline" bezeichneten) Scharnierlinie erreicht wird.

Eine aerodynamische exakte Anbindung wird also ansatzweise (nach dem Vorbild der Fig. 6) nur durch eine Lagerung dieser Tragwerkselemente in drei Punkten absehbar, wobei diese Lagerung schon in einer Null-Grad-Tab-Stellung entsprechende Zwangskräfte in der Tragwerk-Profilstruktur des schamierverbundenen Ruders (Tab) erzeugen wird. Diese Zwangskräfte in der Steuerfläche resultieren nicht nur aus der Flügelbiegung, sondern auch aus der Biegung der Steuerfläche um ihre steife Achse an einer "hohen Kante" (Achse mit großem Trägheitsmoment), wenn sie bei einer gebogenen Scharnierlinie (Hingeline) ausschlagen wird.

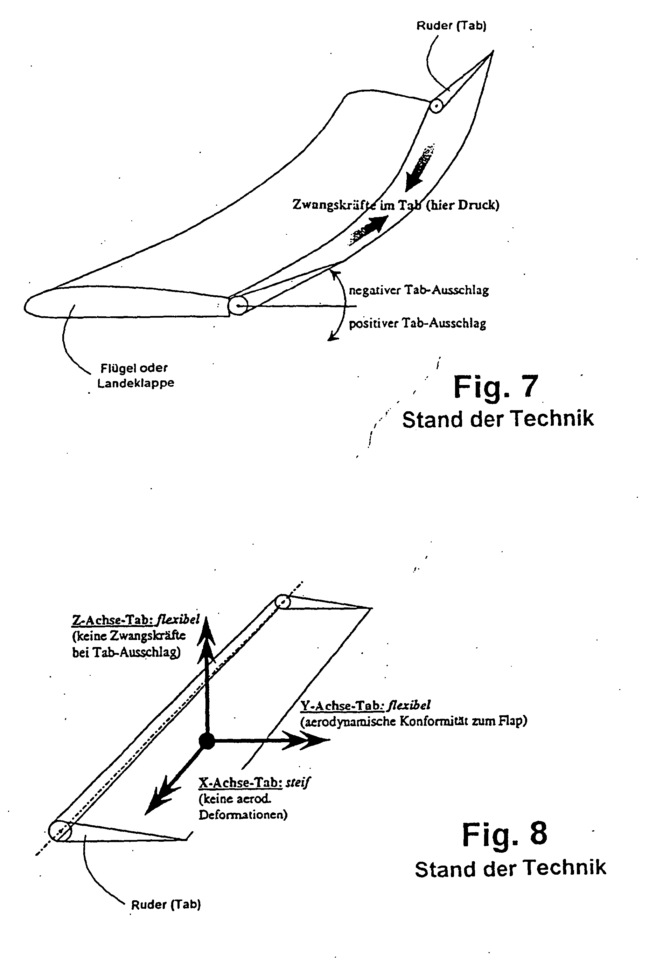

Die beigegebene Fig. 7 gewährt dem Betrachter darüber einen Einblick, welche Zwangskräfte bei einem Ausschlag des Ruders (Tabs) um eine durchgebogene Scharnierlinie wirken werden. In dieser Fig. 7 wird beispielsweise das Entstehen von Druck-Zwangs-Kräften in der Tab-Profilstruktur bei einem negativen Tab-Ausschlag dargestellt. Je nach Aktuationsrichtung werden also sich in der Tab-Profilstruktur des scharnierverbundenen Ruders hohe Druck- und Zugspannungen ergeben, welche zu einem Stabilitätsversagen derselben führen können und somit zusätzliche Maßnahmen, von denen die Stabilisierung der Struktur durch Einrüstung von zusätzlichen Stringern und / oder Rippen oder deren Verstärkung, die mit einer Gewichtserhöhung korrelieren würde, erfordern. Außerdem werden höhere Aktuationskräfte benötigt, die Lagerkräfte in den Scharnieren werden sich erhöhen und die Rudersteifigkeit wird sich nachteilig auf das Verformungsverhalten des Tragflügels bzw. der Landeklappe auswirken. Möchte man die geschilderten Probleme, die sich aus der vorgeschilderten Anbindung des Steuerruders an den Tragflügel oder die Landeklappe über drei Scharniergelenke (bei Lagerung dieser Tragwerkelemente in drei Punkten) ergeben werden, vermeiden, dann wäre es sinnvoll, das nehmliche Ruder über mehrere Scharniergelenke anzubinden und eine Flexibilität um die Tab-Z-Achse gewissermaßen mit in das Ruder (Tab) einzubauen; soll heißen, das Ruder (Tab) wird sich, wie in der beigegebenen Fig. 8 dargestellt, in der Null-Grad-Stellung als auch im ausgeschlagenen Zustand an die vom Tragflügel vorgebogene Scharnierlinie (Hingeline) anpassen, ohne das Zwangskräfte entstehen können. Der Fachwelt ist bekannt, däß die vorgestellten Konfigurationen an Passagierflugzeugen vom Typ "Airbus"- mit Ausnahme des Typs "A300" - bekanntermaßen umgesetzt werden.

Um nun die Anbindung einer am hinteren Teil des Tragflügels befindlichen (leichten) Auftriebshilfe (aus einem CFK-Sandwich-Material) umzusetzen, die beispielsweise (bei einem Großraum-Flugzeug) über die gesamte Länge der Flügelhinterkante verlaufen wird, mit der während des Fluges die Entstehung von Zwangskräften (Druck- oder Zugspannungen) in der (CFK-)Profilstruktur der Auftriebshilfe weitestgehend vermieden werden soll, die man ursächlich auf die Tragflügelbiegung und / oder die Biegung der angesteuerten Auftriebshilfe während deren Klapp- oder Ruderbewegung (je nach Aktuationsrichtung) zurückführen wird, wird der Fachmann sich nach geeigneteren Lösungen umsehen, wofür der bekannte Stand der Technik ihm kein Vorbild bereithält. Es werden (vergleichsweise dem Stand der Technik) günstigere aerodynamische Lösungen benötigt, nach denen die Lager- und Aktuationskräfte an einer Landeklappe und / oder einem Querruder (allg. an einer Auftriebshilfe - bspw. in CFK-Bauweise) gemindert werden, so daß an den Krafteinleitungsbereichen der scharnierbeweglich verbunden Tragwerkelemente (auch) Gewichtsreduzierungen möglich werden.

Die US 4 830 315 zeigt rillenförmige Erhöhungen an der Hinterkante eines Tragflügels zur Verringerung von Strömungsablösungen.

Demzufolge liegt der Erfindung die Aufgabe zugrunde, eine Tragwerk-Profilstruktur eines Flugzeuges mit aerodynamischen Verbesserungen anzugeben, mit der im Hinterkantenbereich einer Tragfläche oder einer (von mehreren) Auftriebshilfen (Landeklappe und / oder Querruder) die Entstehung von Zwangskräften in der Tragwerk-Profilstruktur durch Flügelbiegung und / oder durch Biegung der angesteuerten Auftriebeshilfe weitestgehend vermieden wird. Es soll eine Minderung der Lager- und Aktuationskräfte erreicht werden, so daß an den Krafteinleitungsbereichen der scharnierbeweglich verbunden Tragwerkelemente eine Gewichtsersparnis erreicht wird.

Diese Aufgabe wird durch die im Anspruch 1 angegebenen Maßnahmen gelöst. In den weiteren Ansprüchen werden zweckmäßige Ausgestaltungen dieser Maßnahmen angegeben.

Die Erfindung ist in einem Ausführungsbeispiel anhand der Zeichnungen näher erläutert. Es zeigen
- Fig. 1: den prinzipiellen Aufbau eines Ruders mit einer der oberen und unteren Hautschale jeweils ausgeformten rillenförmigen Erhöhung:
- Fig. 2: eine Ansicht der paßgenau aufeinander angeordneten rillenförmigen Erhöhungen mit Darstellung von deren Fügeflächenbreite;
- Fig. 3: die Ansicht nach Fig. 2 in Profiltiefenrichtung;
- Fig. 4: den (sichtbaren inneren) Aufbau des Ruders nach Fig. 1 im Querschnitt;
- Fig. 5: die mit zwei Scharnieren ausgeführte bewegliche Lagerung eines Ruders (Tab) an einer Landeklappe oder einem Tragflügel;
- Fig. 6: die mit drei Scharnieren ausgeführte bewegliche Lagerung eines Ruders (Tab) an einer Landeklappe oder einem Tragflügel;
- Fig. 7: die Ansicht nach Fig. 5 bei einem negativ ausgeführten Ausschlag des Ruders mit Darstellung der Wirkungsrichtung von strukturbeanspruchenden Zwangskräften;
- Fig. 8: die Einzeldarstellung eines mittels mehrerer Scharniere am Tragflügel oder an der Landeklappe scharnierbeweglich gelagerten Ruders (nach dem Vorbild der Figuren 5 und 7) mit Darstellung der Wirkungsrichtung von strukturbeanspruchenden Zwangskräften (in den drei Richtungen);
- Fig. 9: die Ansicht eines über die gesamte Flügel- oder Landeklappen-Hinterkante am Tragflügel oder an der Landeklappe scharnierbeweglich gelagerten Ruders (CFK-FINTAB).

Hinsichtlich der Lösungen nach den Figuren 5 bis 8 wird eingangs der Ausführungen ausgeführt, so daß sich weitere Erläuterungen erübrigen. Es wird nur soweit ergänzt, daß sich in der Fig. 5 die bekannten aerodynamischen Probleme bei einer beabsichtigten Lagerung eines langen Ruders (Tab) in zwei Scharnier-Anbindungen wiederfinden. Aus der Fig. 6 wird man eine aerodynamische (mit Scharnieren ausgeführte) Anbindung des Ruders (Tab) an der Landeklappe bzw. am Tragflügel durch scharnierbewegliche Lagerung in drei Punkten entnehmen, wobei diese Lagerung schon in der "Null-Grad-Tab-Stellung" Zwangskräfte in der Struktur erzeugt. In der Fig. 7 wird der Ausschlag des Ruders (Tab) um eine durchgebogene Scharnierlinie dargestellt, wonach bei einem negativen Tab-Ausschlag in der Tab-Struktur Druck-Zwangskräfte auftreten werden. In der Fig. 8 wird nun ein einzelnes Ruder (Tab) dargestellt, anhand dessen die Aufmerksamkeit des Betrachter auf die erforderlichen, optimierten Steifigkeitseigenschaften eines Ruders gelenkt wird, um damit das Auftreten von Zwangskräften zu vermeiden, sofern eine aerodynamische (exakt ausgeführte) Anbindung des Ruders (Tab) an der Landeklappe bzw. am Tragflügel durch Lagerung in mehreren Punkten geschehen ist. Mit diesen vorgestellten Lösungen wird beabsichtigt, das hintergründige Verständnis des Betrachters für die (eingangs geschilderte) Problematik zu vertiefen, um einerseits eine Beseitigung der dem bekannten Stand der Technik anhaftenden Nachteile zu erkennen und andererseits dessen Neugier auf das nachfolgend vorgestellte Lösungskonzept, das anhand eines Ausführungsbeispiels vorgestellt wird, zu lenken.

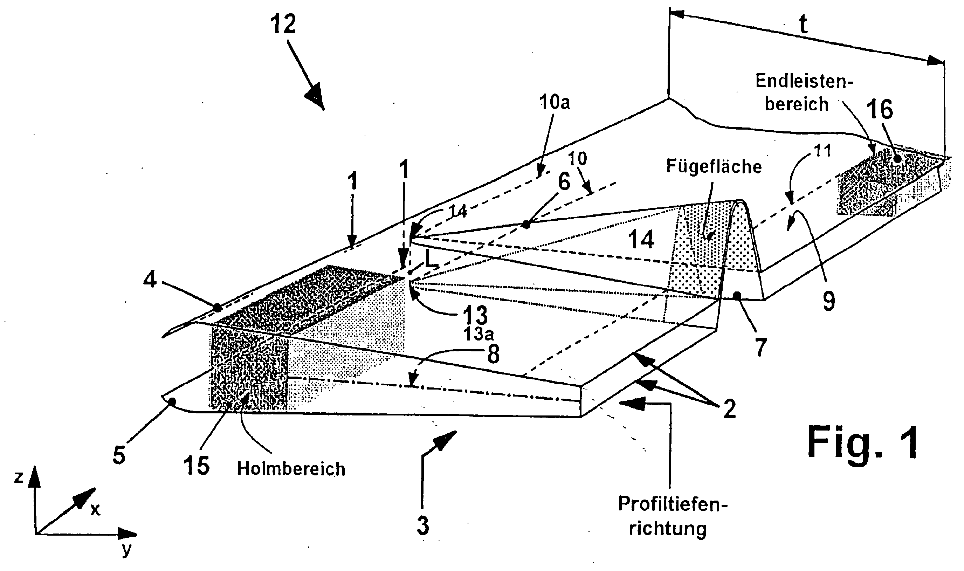

Vorangestellt wird, daß mit den aerodynamischen Verbesserungen an einer Tragwerk-Profilstruktur eines Flugzeuges, die im Hinterkantenbereich einer Tragfläche oder einer (von mehreren) Auftriebshilfen (Landeklappe und / oder Querruder) angeordnet ist, die Entstehung von Zwangskräften in der Tragwerk-Profilstruktur durch Flügelbiegung und / oder durch Biegung der angesteuerten Auftriebeshilfe weitestgehend vermieden wird. Danach wird vorgesehen, eine Tragwerk-Profilstruktur einzusetzen, die nach dem Vorbild der Fig. 1 realisiert ist. Diese Tragwerk-Profilstruktur [für beispielsweise ein Ruder (Tab) bzw. die Hinterkante eines Ruders, einer Landeklappe oder eines Tragflügels] ist mit einer auf dem (allgemein bezeichneten) inneren Aufbau eines Tragflügels oder einer Auftriebshilfe, ober- und unterhalb abgelegten tragenden aerodynamischen Fläche realisiert.

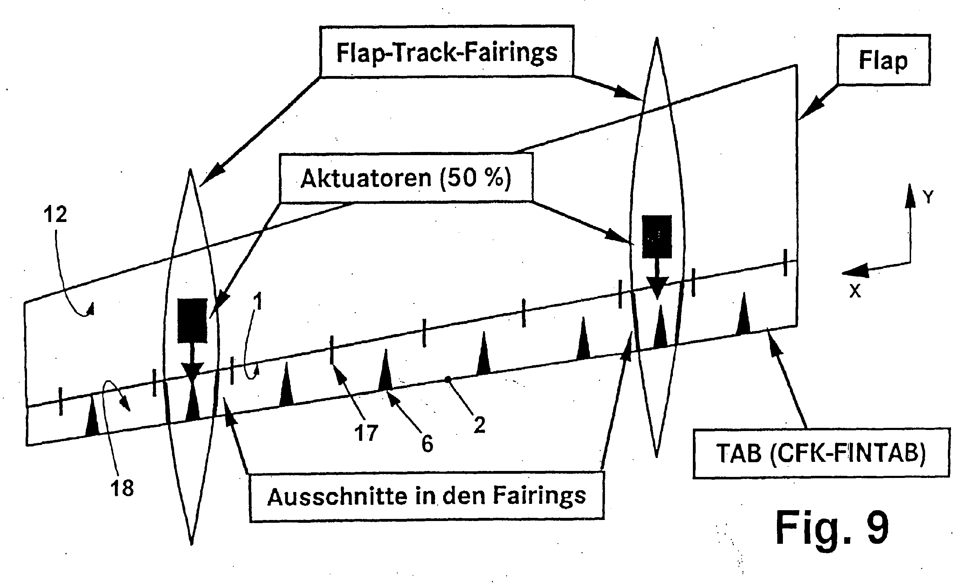

An dieser Stelle wird erwähnt, daß unter Auftriebshilfe (hier beispielsweise) eine Landeklappe oder ein Steuerruder, vorzugsweise einem Querruder, mit einer aerodynamischen Stellfläche verstanden wird. Außerdem bezieht sich der bezeichnete "innerer Aufbau" hinichtlich der Figuren 1 bis 4 allgemein auf ein (nach der Fig. 1 beispielhaftes) Steuerruder oder eine Landeklappe, die neben (hier vernachlässigten weiteren Zusatzelementen) in der Hauptsache aus den Komponenten: Kastenholm 15 und Endkantenleiste 16 besteht, welche in Spannweitenrichtung der Landeklappe oder des Steuerruder parallel liegen und in Richtung der Profiltiefe t zueinander beabstandet sind. Auf dem Kastenholm- und dem Endkantenleistenbereich werden ober und unterseitig die erwähnten Hautschalen 4, 5 befestigt, um zu der erwähnten steuerbaren aerodynamischen Fläche (Steuerflächenstruktur) zu gelangen. Letztere ist mit einer an der Vorder- und Hinterkante 1, 2 des Tragflügels oder der Auftriebshilfe abschließenden und in deren Spannweitenrichtung sich erstreckenden oberen und unterer Hautschale 4, 5 (Ober- und Unterschale) vergegenständlicht, wobei die Auftriebshilfe am hinteren Teil des Tragflügels angeordnet ist. Der oberen und unteren Hautschale 4, 5 sind (beispielsweise nach der Fig. 9) mehrere rillenförmige Erhöhungen 6, 7 ausgeformt, die in Spannweitenrichtung 3 (denkbar) des Tragflügels und (vordergründig) der Auftriebshilfe [Landeklappe und / oder Steuerruder (Querruder)] zueinander beabstandet angeordnet sind. Der rillenförmige Verlauf der Erhöhungen 6, 7 soll (beispielsweise nach dem Vorbild der Fig. 1) definitiv an der Hinterkante 2 (der Hautschalen 4, 5) beginnen und in Richtung einer (fiktiven) Profilmittellinie 8 (Skelettlinie) des inneren Aufbaus verlaufen.

Es wird erwähnt, daß die genannten Erhöhungen 6, 7, die (wie genannt) sowohl der oberen als auch der unterern Hautschale 4, 5 mit gleichartigem Verlauf und gleichartiger Gestalt in gleicher Richtung ausgeformt werden, eine zur Profilmittellinie 8 geöffnete parabelförmige (parabelgeformte) Gestalt V-förmigen Aussehens aufweisen, die der betreffenden Auftriebshilfe (der Landeklappe und / oder dem Steuerruder) oder (denkbar auch) dem Tragflügel ausgeformt sind. Dabei wird beispielsweise an als Erhöhungen 6, 7 ausgebildete konisch geformte aerodynamische Elemente mit parabelfömiger Gestalt, die man aus den Figuren 1, 3 und 4 deutlich wahrnehmen wird, gedacht. Diese Erhöhungen 6, 7 sind, eine (nicht näher erwähnte) Unterbrechung der (in Spannweitenrichtung angeordneten) Endkantenleiste 16 vorausgesetzt, innerhalb dem (zwischen der Leisten-Unterbrechung) aufgespannten Freiraum angeordnet.

Diese Erhöhungen 6, 7 überspannen mit einer nach oberhalb der oberen Hautschale 4 (Oberschale) und nach oberhalb der unteren Hautschale 5 (Unterschale) sich (der Hautoberfläche) entfernenden parabelförmig gewölbten Erhöhung 6, 7, die im Ursprung der Parabel in eine konusförmige Endform besitzt, paarweise die betreffende Unterbrechung, da auch vorgesehen ist, daß die Endkantenleiste 16 an mehreren Stellen unterbrochen ist. Entlang dem (nachfolgend geschilderten) Verlauf der Erhöhungen 6, 7 in Profiltiefenrichtung wird man den (nahezu identischen) Verlauf dieser nach oberhalb parabelförmig geschwungenen Wölbung vorfinden, deren formabnehmende Ausformung mit der Verringerung des Abstandes zur Vorderkante 1 (der Ober- oder Unterschale) weitestgehend allmählich abnehmend veränderlich (mit stetig abnehmender und nach oben geöffneter Parabelform) gestaltet ist.

Im Detail betrachtet ist die erwähnte Ausformung der Erhöhungen 6, 7 mit der Verringerung des Abstandes zur Vorderkante 1 (der Hautschalen 4, 5) formabnehmend und variabel gestaltet. Variabel deshalb, weil beim Tragflügel einerseits der Verlauf der Erhöhungen 6, 7, die der oberen und unteren Hautschale 4, 5 des betreffenden Tragflügels ausgeformt sind, entweder nahegelegen der Hinterkante 2 der Hautschalen 4, 5 oder mittig der Profiltife t (des Tragflügels) [allgemein: nicht die Mitte der Profiltiefe t des Tragflügels überschreitend] beendet ist. Andererseits ist bei der betreffenden Auftriebshilfe (Landeklappe oder Steuerruder) vorgesehen, daß der Verlauf der Erhöhungen 6, 7, die der oberen und unteren Hautschale 4, 5 der betreffenden Auftriebshilfe ausgeformt sind, (allgemein betrachtet) wenigstens die Mitte der Profiltiefe t (der betreffenden Auftriebshilfe) überschreitend ist. Dabei ist bedacht, daß der Verlauf der Erhöhungen 6, 7 an einer der Vorderkante 1 der oberen und unteren Hautschale 4, 5 nahegelegenen und in Spannweitenrichtung 3 der betreffenden Auftriebshilfe parallel verlaufenden fiktiven ersten und zweiten Profillinie 10a, 10 beendet ist.

Die Ausformung der (in Richtung der Profilmittellinie 8) paarweise angeordneten Erhöhungen 6, 7 ist endkantenseitig an einer spitzenartig zulaufenden Endkante 13, 14 abgeschlossen, die nach der Fig. 1 an der (in Spannweitenrichtung der Landeklappe oder des Steuerruders) verlaufenden (sogenannten) ersten und zweiten fiktiven Profillinie 10a, 10 die beispielsweise nahe dem Kastenholm 15 liegt oder unmittelbar die (nach außerhalb des inneren Aufbaus nicht sichtbare und nicht hautbedeckte rückwärtige) Oberfläche des Holmbereiches tangiert. Demnach ist (allgemein betrachtet) der Verlauf der ersten Erhöhung 6 in etwa an der Verlängerung einer fiktiven Endkanten-Achse L, die lotrecht stehend auf der Profilmittellinie 8 ist und die eine (nahe dem Kastenholm 15 gelegene oder diesen tangierende) Spitze 13a tangiert, in welche der Bereich der Endkante 13 der verjüngten zweiten Erhöhung mündet, beendet.

Aus der Fig. 1 läßt sich auch (ohne weiteres) erkennen, daß der oberen Hautschale 4 (Oberschale) eine erste Erhöhung 6 und der unteren Hautschale 5 (Unterschale) eine zweite Erhöhung 7 ausgeformt ist.

Beide paarweise installierten Erhöhungen 6, 7 sind in einem (oberhalb der Hautauflagefläche der Endkantenleiste 16 angeordneten) Hinterkanten-Endbereich 9 des Tragflügels oder der betreffenden Auftriebshilfe, der durch die Hinterkante 2 und eine letzterer nahegelegene und ihr parallel verlaufende (sogenannten) fiktive dritte Profillinie 11 eingegrenzt ist und in deren Spannweitenrichtung 3 [in Tab(achsen)-x-Richtung] verläuft, zueinander entlang einer Tab-z-Achse aufliegend passgenau gefügt sind.

Mit einem (vorgreifenden) Blick auf die Fig. 9 wird man dieser Figur außerdem entnehmen, daß aus stabilitätserhaltenden und aerodynamischen Gründen den betreffenden Auftriebshilfen oder (denkbar) dem Tragflügel (nach dem Vorbild der Fig. 1) mehrere paarweise angeordnete Erhöhungen 6, 7, welche die Hautschalen 4, 5 in Tab(achsen)-z-Richtung aussteifen werden, ausgeformt werden, die nach dem Vorbild der ersten Erhöhung 6 aus der oberen Hautschale 4 und dem Vorbild der zweiten Erhöhung 7 aus der unteren Hautschale 5 ausgeformt sind.

Die Fügung der beiden Erhöhungen 6, 7 soll beispielsweise; sofern die Ausführung der Auftriebshilfen [beispielsweise der Landeklappe oder des Steuerruders oder (zukunftsträchtig gedacht) des Tragflügels - [(denkbar) bei einem Großraumflugzeug] nach dem Vorbild der Fig. 9 in CFK-Bauweise geschehen wird, mit Hilfe eines geeigneten Klebstoffs (Kalt- oder Warmkleber respektive Ein- oder Mehrkomponentenkleber) oder einem anderen geeigneten Klebeverbindungsmittel realisiert werden, der die beiden paßgenau geformten und einander aufliegenden Fügeflächen (Auflageflächen) der ersten und zweiten Erhöhung 6, 7, wie in Fig. 1 gezeigt, innerhalb dem Hinterkanten-Endbereich 9 stoffschlüssig und unlösbar befestigt verbindet. Dabei wird das Fügen der beiden Erhöhungen 6, 7 mit oder ohne Zufuhr von Wärme und mit oder ohne Anwendung von Kraft (Druckbeaufschlagung der Fügeflächen) erfolgen. Die zu verbindenden Erhöhungen 6, 7 bleiben an der Fügestelle im festen Zustand.

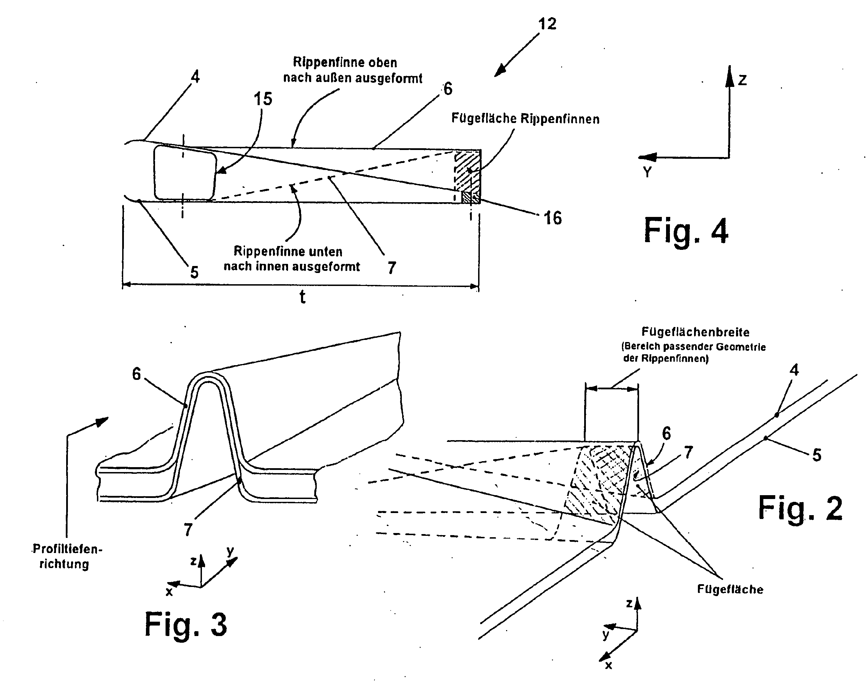

Einen Auszug aus der Fig. 1 wird man in der Fig. 2 wiederfinden. Aus dieser Fig. 2 kann man deutlich den Fügebereich der aufeinander gelegenen Erhöhungen 6, 7, welche im Flugzeugbau auch als "Finnen" bezeichnet werden, erkennen. Dabei besitzen die parabelförmig [zur (figurlich) nicht gezeigten] Profilmittellinie 8 in Tab(achsen)-z-Richtung] geöffneten Erhöhungen 6, 7 im angegeben Abmaß der [in Tab(achsen)-y-Richtung sich erstreckenden] Fügeflächenbreite eine (aufeinander abgestimmte) passende Geometrie, um eine nahezu von Hohlstellen befreite Fügung der zu klebenden Fügeflächen (im Trockenzustand) zu erhalten.

Ergänzt wird die Lage eines einzelnen Paares an Erhöhungen 6, 7 (Finnen) durch die Querschnitts-Darstellung nach der Fig. 3.

Aus der Fig. 4 kann man den Längsschnitt einer Landeklappe oder eines Steuerrruders (Querruders) entnehmen, in welcher der Verlauf der Erhöhungen 6, 7 in Profiltiefenrichtung ([in Tab(achsen)-y-Richtung] dargestellt wird.

Abbschließend wird noch auf die Fig. 9 verwiesen, die ein praktisches Beispiel für die Umsetzung der vorangeschilderten Lösung nach den Figuren 1 bis 4 vermittelt. Aus der Figur 9 wird man eine Landeklappe (Flap) mit einem über mehrere Scharniere 17 scharnierbeweglich angebundenen Ruder 18 (Tab) in CFK-Bauweise, das von Fachleuten als "CFK-FINTAB" bezeichnet wird, erblicken. Deutlich ist die Anbindung des Ruders 18 über die gesamte Hinterkantenlänge der Landeklappe (Flap) erkennbar. Ungeachtet der zusätzlichen Darstellung der Aktuatoren und der Flap-Track-Fairings, auf die nicht näher eingegangen wird, findet man hier ein typisches Anwendungsbeispiel vor, das (auch aufgrund der eintreffenden Gewichtsersparnis) möglicherweise bei einem Großraumflugzeug entsprechende Beachtung finden wird.

Zusammenfassen läßt sich abschließend folgender Sachverhalt. Ausgehend von den Lösungen nach den Figuren 5 bis 8, welche hinsichtlich der Vermeidung der eingangs geschilderten Nachteile dieser Lösungen einen Lösungsansatz für das Auffinden einer verbesserten (geeigneteren) innovativen Lösung darstellen, scheint es (auf Auftriebshilfen bezogen) sinnvoll, die beipielhafte Landeklappe oder das Steuerruder (bezeichnet als "Tab") über mehrere Scharniergelenke anzubinden und eine Flexibilität um die Tab-z-Achse gewissermaßen mit in das Tab einzubauen, wonach sich das Tab in einer Null-Grad-Stellung als auch im ausgeschlagenen Zustand an die vom Tragflügel vorgegebene Hingelinie anpassen sollte, ohne daß Zwangskräfte entstehen können (vgl. Fig. 8). Aus diesem Ansatz resultiert die Intuition, eine leichte und aerodynamisch exakt angebundene Steuerfläche zu verwirklichen, welche beispielsweise über die gesamte Länge der Flügelhinterkante verläuft. Ebenfalls sollten die auftretenden Lager- und Aktionskräfte gemindert werden, so daß es machbar scheint, an diesen Krafteinleitungsbereichen Gewicht einzusparen. Eine dafür geeignete Lösung wird in den Figuren 1 bis 4 und 8 gezeigt. In der Fig. 1 wird nun der Aufbau einer Steuerflächen-Struktur dargestellt, der den erwähnten Ansprüchen gerecht wird. Diese Steuerflächen-Struktur setzt sich (in der Hauptsache aus den Hauptkomponenten: "Kastenholm 15, obere Hautschale 4 (Oberschale), untere Hautschale 5 (Unterschale), Endkantenleiste 16" zusammen, wobei der innerer Aufbau dieses Teiles der Tragwerk-Struktur neben dem Kastenholm 15 und der Endkantenleiste 16 durch weitere (nicht näher gezeigte) Strukturelemente (Versteifungs- und Verbindungselemente) vervollständigt wird. Zur Gewährleistung der Flexibilität um die Tab-Hochachse [Tab(achsen)-z-Achse] sind aus den Hautschalen 4, 5 konisch zum Kastenholm 15 auslaufende rillenförmige Erhöhungen 6, 7 (Finnen) ausgeformt. Die erste Erhöhung 6 (obere Finne) läuft in die Tab-Struktur hinein und endet an einer Endkanten-Achse L, die lotrecht auf der Profilmittellinie 8 steht und welche der Endkantenbereich der (unterhalb der ersten Erhöhung 6 verlaufenden) zweiten Erhöhung 7 (unteren Finne) tangiert, wobei die zweite Erhöhung 7 aus der Tab-Struktur hinausläuft.lm Freiraum des Endleistenbereiches (der abschnittsweise unterbrochenen Endkantenleiste 16 sind die Erhöhungen 6, 7 (Finnen) passgenau zueinander gefertigt und über eine Klebung gefügt (vgl. Fig. 1).

Die rillenförmigen Erhöhungen 6, 7 (Finnen) dienen als Federelemente bzw. Dehnfalten und gewährleisten die notwendige Flexibilität um die Tab-Hochachse [Tab(achsen)-z-Achse]. Zum Kastenholm 15 verlaufend nimmt die Höhe der Erhöhungen 6, 7 (Finnen) entlang der Tab-Hochachse ab, da sich hier die neutrale Faser des einzelnen Tabs befindet und somit weniger Verformung stattfinden wird. Die Erhöhungen 6, 7 (Finnen) steifen die Hautschalen 4, 5 in Tab(achsen)-z-Richtung aus, ebenfalls versteifen sie über ihre Verbindung miteinander den gesamten Struktur-Körper. Sie übernehmen somit die Rippenfunktion (Querkraftübertragung). Durch das Ineinanderlaufen der Erhöhungen 6, 7 (Finnen) erübrigt sich eine Dichtung des dehnbaren Bereiches. Der Kastenholm 15 übernimmt die Torsionsaufnahme im größeren Maße, der daher sehr torsionssteif dimensioniert wird, wobei ein geschlossenes Profil mit einem + / - 45°-igen Faserverbundaufbau ideal ist.

### Bezugszeichenliste

- 1: Vorderkante
- 2: Hinterkante
- 3: Spannweitenrichtung
- 4: obere Hautschale; Oberschale
- 5: untere Hautschale; Unterschale
- 6: erste Erhöhung, rillenförmig
- 7: zweite Erhöhung. rillenförmig
- 8: Profilmittellinie
- 9: Hinterkanten-Endbereich
- 10a: erste fiktive Profillinie
- 10: zweite fiktive Profillinie
- 11: dritte fiktive Profillinie
- 12: Landeklappe
- 13: Endkante (der zweiten Erhöhung 6)
- 13a: Spitze
- 14: Endkante (der ersten Erhöhung 6)
- 15: Kastenholm
- 16: Endkantenleiste
- 17: Scharnier
- 18: Ruder (Tab)

- t: Profiltiefe
- L: Endkanten-Achse

## Patentansprüche

1. **Tragwerk-Profilstruktur eines Flugzeuges,** mit einem Tragflügel, welcher eine Auftriebshilfe (12) aufweist, wobei eine auf dem inneren Aufbau der Auftriebshilfe (12) ober- und unterhalb abgelegte tragende aerodynamische Fläche vorgesehen ist, die mit einer an der Vorder- und Hinterkante (1, 2) der Auftriebshilfe (12) abschließenden und in deren Spannweitenrichtung sich erstreckenden oberen und unterer Hautschale (4, 5) realisiert ist, wobei die Auftriebshilfe (12) am hinteren Teil des Tragflügels gelenkig an wenigstens drei Befestigungspunkten befestigt ist, wobei der oberen und der unteren Hautschale (4, 5) mehrere rillenförmige Erhöhungen (6, 7) ausgeformt sind, die in Spannweitenrichtung (3) zueinander beabstandet angeordnet sind, deren Verlauf an der Hinterkante (2) beginnend in Richtung einer Profilmittellinie (8) des inneren Aufbaus definiert ist und deren Ausformung mit der Verringerung des Abstandes zur Vorderkante (1) formabnehmend ist.

2. **Tragwerk-Profilstruktur** nach Anspruch 1, **dadurch gekennzeichnet, daß** der Verlauf der Erhöhungen (6, 7), die der oberen und unteren Hautschale (4, 5) der Auftriebshilfe ausgeformt sind, nicht die Mitte einer Profiltiefe (t) der Auftriebshilfe überschreitend beendet ist.

3. **Tragwerk-Profilstruktur** nach Anspruch 2, **dadurch gekennzeichnet, daß** der Verlauf der Erhöhungen (6, 7) nahegelegen der Hinterkante (2) der Hautschalen (4, 5) oder mittig der Profiltiefe (t) der Auftriebshilfe beendet ist.

4. **Tragwerk-Profilstruktur** nach Anspruch 1, **dadurch gekennzeichnet, daß** der Verlauf der Erhöhungen (6, 7), die der oberen und unteren Hautschale (4, 5) der Auftriebshilfe ausgeformt sind, wenigstens die Mitte der Profiltiefe (t) der Auftriebshilfe überschreitend ist.

5. **Tragwerk-Profilstruktur** nach Anspruch 4, **dadurch gekennzeichnet, daß** der Verlauf der ersten Erhöhung (6) oberhalb der zweiten Erhöhung (7) an einer der Vorderkante (1) der oberen Hautschale (4) nahegelegenen und in Spannweitenrichtung (3) der Auftriebshilfe parallel verlaufenden fiktiven ersten Profillinie (10a) und der Verlauf der zweiten Erhöhung (7) an einer der Vorderkante (1) der unteren Hautschale (5) nahegelegenen und in Spannweitenrichtung (3) der Auftriebshilfe parallel verlaufenden fiktiven zweiten Profillinie (10) beendet ist.

6. **Tragwerk-Profilstruktur** nach Anspruch 1, **dadurch gekennzeichnet, daß** die Erhöhungen (6, 7) nach dem Vorbild einer ersten Erhöhung (6) aus der oberen Hautschale (4) und dem Vorbild einer zweiten Erhöhung (7) aus der unteren Hautschale (5) ausgeformt sind, die beide in einem Hinterkanten-Endbereich (9) der Auftriebshilfe, der durch die Hinterkante (2) und eine letzterer nahegelegene und ihr parallel verlaufende fiktive dritte Profillinie (11) eingegrenzt ist und in deren Spannweitenrichtung (3) verläuft, zueinander aufliegend passgenau gefügt sind.

7. **Tragwerk-Profilstruktur** nach einem der Ansprüche 1 bis 6, **dadurch gekennzeichnet, daß** der Verlauf der ersten Erhöhung (6) oberhalb der zweiten Erhöhung (7) in etwa an der Verlängerung einer fiktiven Endkanten-Achse (L) beendet ist, die lotrecht stehend auf der Profilmittellinie (8) der Auftriebshilfe angeordnet ist.

8. **Tragwerk-Profilstruktur** nach Anspruch 7, **dadurch gekennzeichnet, daß** die Endkanten-Achse (L) gleichermaßen von einer Spitze (13a), die einer spitz zulaufenden Endkante (13) ausgangs der formabnehmenden zweiten Erhöhung (7) zugeordnet ist, tangiert ist, in welche die Endkante (13) der formabnehmenden zweiten Erhöhung (7) mündet.

9. **Tragwerk-Profilstruktur** nach Anspruch 1, **dadurch gekennzeichnet, daß** der Auftriebshilfe entsprechende Erhöhungen (6, 7) mit einer zur Profilmittellinie (8) geöffneten parabelförmigen Gestalt ausgeformt sind.

10. **Tragwerk-Profilstruktur** nach Anspruch 9, **dadurch gekennzeichnet, daß** die Erhöhungen (6, 7) konisch geformte aerodynamische Elemente mit parabelfömiger Gestalt sind.

11. **Tragwerk-Profilstruktur** nach Anspruch 1, **dadurch gekennzeichnet, daß** die formabnehmende Ausformung der Erhöhungen (6, 7) mit der Verringerung des Abstandes zur Vorderkante (1) weitestgehend allmählich abnehmend veränderlich gestaltet ist.

12. **Tragwerk-Profilstruktur** nach Anspruch 1, **dadurch gekennzeichnet, daß** die Ausformung der Erhöhungen (6, 7) in Richtung der Profilmittellinie (8) endkantenseitig eine spitz gestaltete Endkante (13,14) ist.

13. **Tragwerk-Profilstruktur** nach Anspruch 6, **dadurch gekennzeichnet, daß** die Fügeverbindung der Erhöhungen (6, 7) eine feste unlösbare stoffschlüssige Verbindung ist, die mit einem geeigneten Kleber, der zwischen den beiden Fügeflächen geschichtet ist, und mit oder ohne Wärmebeaufschlagung der Erhöhungen (6, 7) und mit oder ohne Anwendung von Kraft auf die Fügestelle im Hinterkanten-Endbereich (9) umgesetzt ist.

## Claims

1. Wing unit profile structure of an aircraft, with an airfoil, which has a lift aid (12), a supporting aerodynamic surface laid down on the inner structure of the lift aid (12) above and below being provided, which surface is realised by an upper and lower skin shell (4, 5) ending at the leading and trailing edge (1, 2) of the lift aid (12) and extending in its wingspan direction, the lift aid (12) being attached at the rear part of the airfoil articulatedly to at least three attachment points, a plurality of channel-shaped ridges (6, 7) being formed in the upper and the lower skin shell (4, 5), which ridges are arranged at a distance from one another in the wingspan direction (3), their progression starting on the trailing edge (2) in the direction of a profile centre line (8) of the inner structure being defined and their formation being shape-decreasing with the reduction in the distance from the leading edge (1).

2. Wing unit profile structure according to claim 1, **characterized in that** the progression of the ridges (6,7), which are formed in the upper and lower skin shell (4, 5) of the lift aid, is terminated not going beyond the centre of a profile depth (t) of the lift aid.

3. Wing unit profile structure according to claim 2, **characterized in that** the progression of the ridges (6, 7) is terminated close to the trailing edge (2) of the skin shells (4, 5) or in the centre of the profile depth (t) of the lift aid.

4. Wing unit profile structure according to claim 1, **characterized in that** the progression of the ridges (6, 7), which are formed in the upper and lower skin shell (4, 5) of the lift aid, at least exceeds the centre of the profile depth (t) of the lift aid.

5. Wing unit profile structure according to claim 4, **characterized in that** the progression of the first ridge (6) above the second ridge (7) is terminated at a fictitious first profile line (10a) situated close to the leading edge (1) of the upper skin shell (4) and running parallel in the wingspan direction (3) of the lift aid and the progression of the second ridge (7) is terminated at a fictitious second profile line (10) situated close to the leading edge (1) of the lower skin shell (5) and running parallel in the wingspan direction (3) of the lift aid.

6. Wing unit profile structure according to claim 1, **characterized in that** the ridges (6, 7) are formed according to the model of a first ridge (6) from the upper skin shell (4) and the model of a second ridge (7) from the lower skin shell (5), which are both joined lying on top of one another fitting exactly in a trailing edge end area (9) of the lift aid, which area is bordered by the trailing edge (2) and a fictitious third profile line (11) lying close to the latter and running in its wingspan direction (3).

7. Wing unit profile structure according to claims 1 to 6, **characterized in that** the progression of the first ridge (6) above the second ridge (7) is terminated roughly at the extension of a fictitious end edge axis (L), which is arranged standing vertically on the profile centre line (8) of the lift aid.

8. Wing unit profile structure according to claim 7, **characterized in that** the end edge axis (L) has likewise tangent to it a point (13a), which is assigned to an end edge (13) tapering off at the end of the shape-decreasing second ridge (7), into which point the end edge (13) of the shape-decreasing second ridge (7) runs.

9. Wing unit profile structure according to claim 1, **characterized in that** corresponding ridges (6, 7) are formed in the lift aid with a parabolic form open towards the profile centre line (8).

10. Wing unit profile structure according to claim 9, **characterized in that** the ridges (6, 7) are conically formed aerodynamic elements with a parabolic form.

11. Wing unit profile structure according to claim 1, **characterized in that** the shape-decreasing formation of the ridges (6, 7) is configured to the largest possible extent gradually decreasing variably with the reduction in the distance from the leading edge (1).

12. Wing unit profile structure according to claim 1, **characterized in that** the formation of the ridges (6, 7) in the direction of the profile centre line (8) on the end edge side is a pointedly formed end edge (13, 14).

13. Wing unit profile structure according to claim 6, **characterized in that** the joint connection of the ridges (6, 7) is a fixed, permanent, bonded joint, which is implemented using a suitable adhesive, which is layered between the two joining faces, and with or without the action of heat on the ridges (6, 7) and with or without application of force to the joining point in the trailing edge end area (9).

## Revendications

1. **Structure de profil de voilure d'un aéronef,** comprenant une aile qui présente un moyen auxiliaire de sustentation (12), une surface aérodynamique portante étant prévue sur la structure interne du moyen auxiliaire de sustentation (12), au-dessus et en dessous de la structure, laquelle surface est réalisée avec des coques d'habillage (4, 5) supérieure et inférieure se terminant au niveau des bords avant et arrière (1, 2) du moyen auxiliaire de sustentation (12) et s'étendant dans le sens de l'envergure de celui-ci, le moyen auxiliaire de sustentation (12) étant fixé de manière articulée à la partie postérieure de l'aile, en au moins trois points de fixation, sachant que plusieurs surélévations (6, 7) en forme de rainures sont façonnées dans les coques d'habillage (4, 5) supérieure et inférieure, en étant espacées les unes des autres dans le sens de l'envergure (3), dont le tracé commence sur le bord arrière (2) et s'étend en direction d'une ligne de profil médiane (8) de la structure interne et dont la forme se rétrécit à mesure que la distance par rapport au bord avant (1) diminue.

2. **Structure de profil de voilure** selon la revendication 1, **caractérisée par le fait que** le tracé des surélévations (6, 7), qui sont façonnées dans les coques d'habillage (4, 5) supérieure et inférieure, se termine sans dépasser le milieu d'une profondeur de profil (t) du moyen auxiliaire de sustentation.

3. **Structure de profil de voilure** selon la revendication 2, **caractérisée par le fait que** le tracé des surélévations (6, 7) se termine à proximité du bord arrière (2) des coques d'habillage (4, 5) ou au milieu de la profondeur de profil (t) du moyen auxiliaire de sustentation.

4. **Structure de profil de voilure** selon la revendication 1, **caractérisée par le fait que** le tracé des surélévations (6, 7), qui sont façonnées dans les coques d'habillage (4, 5) supérieure et inférieure du moyen auxiliaire de sustentation, dépasse au moins le milieu de la profondeur de profil (t) du moyen auxiliaire de sustentation.

5. **Structure de profil de voilure** selon la revendication 4, **caractérisée par le fait que** le tracé de la première surélévation (6), située au-dessus de la deuxième surélévation (7), se termine au niveau d'une première ligne de profil fictive (10a), située à proximité du bord avant (1) de la coque d'habillage (4) supérieure et s'étendant dans le sens de l'envergure (3), parallèlement au moyen auxiliaire de sustentation, et le tracé de la deuxième surélévation (7) se termine au niveau d'une deuxième ligne de profil fictive (10) située à proximité du bord avant (1) de la coque d'habillage (5) inférieure et s'étendant dans le sens de l'envergure (3), parallèlement au moyen auxiliaire de sustentation.

6. **Structure de profil de voilure** selon la revendication 1, **caractérisée par le fait que** les surélévations (6, 7) sont façonnées selon le modèle d'une première surélévation (6) dans la coque d'habillage (4) supérieure et selon le modèle d'une deuxième surélévation (7) dans la coque d'habillage (5) inférieure et sont toutes deux assemblées avec ajustage serré dans une zone d'extrémité de bord arrière (9) du moyen auxiliaire de sustentation qui est délimitée par le bord arrière (2) et une troisième ligne de profil (11), située à proximité dudit bord arrière, parallèlement à celui-ci, et s'étend dans le sens de l'envergure (3).

7. **Structure de profil de voilure** selon une des revendications 1 à 6, **caractérisée par le fait que** le tracé de la première surélévation (6), au-dessus de la deuxième surélévation (7), se termine approximativement au niveau du prolongement d'un axe fictif (L) de bord d'extrémité qui est perpendiculaire à la ligne de profil médiane (8) du moyen auxiliaire de sustentation.

8. **Structure de profil de voilure** selon la revendication 7, **caractérisée par le fait que** l'axe de bord d'extrémité (L) est également tangent à une pointe (13a) qui est associée à un bord d'extrémité (13) effilé, situé à la sortie de la surélévation (7) qui se rétrécit, et dans laquelle débouche le bord d'extrémité (13) de la deuxième surélévation (7) dont la forme rétrécit.

9. **Structure de profil de voilure** selon la revendication 1, **caractérisée par le fait que** des surélévations (6, 7) correspondantes avec une forme parabolique ouverte en direction de la ligne de profil médiane (8) sont façonnées dans le moyen auxiliaire de sustentation.

10. **Structure de profil de voilure** selon la revendication 9, **caractérisée par le fait que** les surélévations (6, 7) sont des éléments aérodynamiques coniques à configuration parabolique.

11. **Structure de profil de voilure** selon la revendication 1, **caractérisée par le fait que** la forme effilée des surélévations (6, 7) est agencée de manière à diminuer progressivement à mesure que la distance par rapport au bord avant (1) diminue.

12. **Structure de profil de voilure** selon la revendication 1, **caractérisée par le fait que** la forme des surélévations (6, 7) en direction de la ligne de profil médiane (8) se présente comme un bord d'extrémité (13, 14) pointu.

13. **Structure de profil de voilure** selon la revendication 6, **caractérisée par le fait que** la liaison d'assemblage des surélévations (6, 7) est une liaison par matière indémontable qui est réalisée à l'aide d'un adhésif adapté appliqué entre les deux surfaces à assembler, avec ou sans application de chaleur aux surélévations (6, 7) et avec ou sans application d'une force au point d'assemblage dans la région d'extrémité de bord arrière (9).
